# EUROPEAN PATENT SPECIFICATION

(11) **EP 1 110 650 B1**
(45) Date of publication and mention of the grant of the patent: **09.02.2005**
(21) Application number: 00830812.4
(22) Date of filing: 11.12.2000
(51) Int. Cl.: B23D 45/06

(54) **Saw blade positioning system for table saw**
Sägeblattpositioniervorrichtung für Tischsäge
Système de positionnement de scie pour scie à table

(30) Priority: 21.12.1999 IT BO990698
(43) Date of publication of application: 27.06.2001
(73) Proprietor: SCM GROUP S.p.A., 47900 Rimini (IT)
(72) Inventor: Pucci, Aureliano, 47900 Rimini (IT)
(74) Representative: Lanzoni, Luciano

(56) References cited:
- DE-A- 2 363 898
- US-A- 2 131 492
- US-A- 5 040 444
- US-A- 5 819 625

## Description

The present invention relates, according to the preamble of claim 1, to a disc saw machine for working components made of wood or similar materials, in particular a panel saw machine with a circular cutting tool that interacts with a horizontal work table (see e.g. US-A 2 131 492).

Machines of this kind for working wooden components usually comprise a base that supports a fixed horizontal table forming the machine's work table on which the panel is placed and moved. The panel is then fed to a cutting tool that is centrally mounted in the table.

The tool consists of a circular blade which protrudes from the work table through a slot. The blade is in turn mounted on a blade holder unit comprising a plate linked directly to the shaft to which the tool is keyed and which is connected to a motor. The mounting plate can be angled in both directions so as to tilt the blade relative to the work table. The mounting plate also has guides in which a blade height adjustment slide can run.

The mounting plate and the slide are directly connected to control elements that can be operated by the operator using handwheels located outside the machine to tilt the blade and adjust the height of the blade relative to the work table.

In a known solution, for the tilting mounting plate, these control elements comprise a worm screw that acts directly on the mounting plate. Depending on the direction in which the screw is turned, the mounting plate is tilted by means of appropriate guides made on the machine base. In order to stall the worm screw, document US-A 2131492 discloses a clamp comprising a half-moon section that fits in a shouldered groove formed in the worm screw. The height of the blade is adjusted using a flexible connection (usually consisting of a sheathed cable) connected at one end to the slide and at the other to a lead nut operated by a handwheel mounted at the front of the machine. The pulling force applied to the wire using the handwheel has the effect of raising or lowering the slide and, hence, the blade, irrespective of the angle at which the mounting plate is currently tilted.

This control system for the adjustment of blade height has a disadvantage caused by the flexibility of the elements that transmit motion from the handwheel to the slide. In practice, the forces applied to the slide under extreme working conditions may cause a reverse action on the height adjustment elements. For example, when cutting very thick material, the blade may become unstable on account of the forces and vibrations acting on it, causing it to be forced down and to assume a position relative to the work table that is lower down than that required and set by the operator.

It is therefore obvious that a reversible, flexible system of this kind is unreliable and cannot guarantee sufficient positional accuracy during machining operations.

The aim of the present invention is to overcome the disadvantage described above by providing a disc saw machine designed to work panels made of wood or similar materials and whose structure comprises an extremely practical tool adjustment system, that is at once accurate in positioning the tool, compact in its overall dimensions and stable in maintaining the tool in the required position under all working conditions of the machine.

The technical characteristics of the invention, according to the above mentioned aims, are described in the claims below and its advantages are apparent from the detailed description which follows with reference to the accompanying drawings, which illustrate a preferred embodiment of the invention without restricting the scope of the inventive concept and in which:
- Figure 1 is a schematic top plan view, with some parts cut away in order to better illustrate others, of a machine for working wooden components made according to the present invention;
- Figure 2 is a view from A of the machine in Figure 1, with some parts shown in cross section and others cut away in order to better illustrate certain details;
- Figure 3 is a view from B of the machine in Figure 1, with a tool in the vertical position, and with some parts illustrated in cross section and others cut away;
- Figure 4 illustrates the machine shown in Figure 3, with the tool in an inclined position, and with some parts illustrated in cross section and others cut away;
- Figure 5 illustrates a detail C from Figure 3 and shows a kinematic chain in a front view, with some parts in cross section;
- Figure 6 illustrates a detail D from Figure 3 and shows a kinematic chain in a bottom plan view, with some parts in cross section;
- Figure 7 illustrates a detail E, again from Figure 3, and shows a kinematic chain in a rear view, with some parts in cross section.

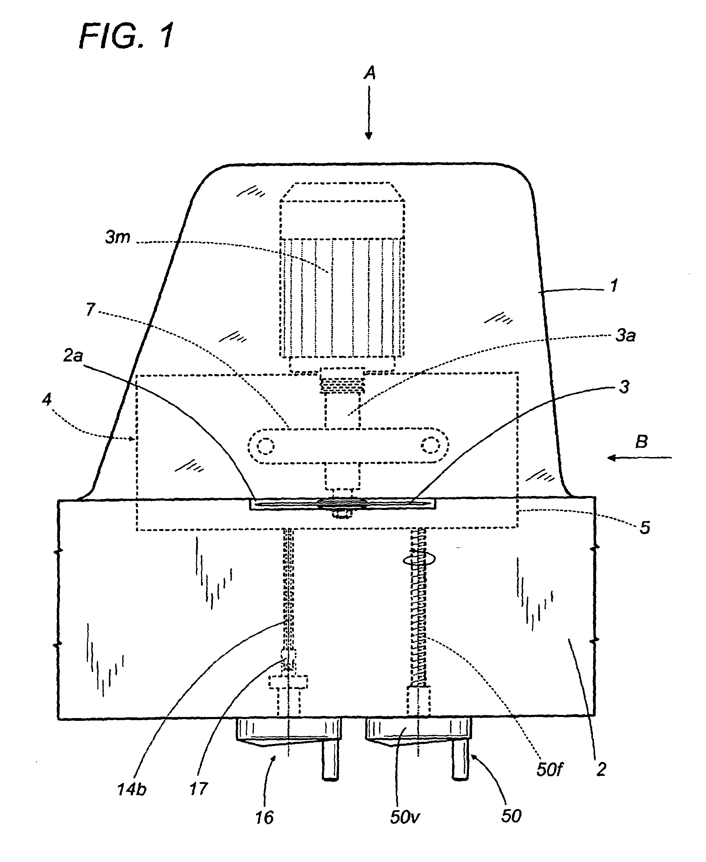

With reference to the accompanying drawings, in particular Figure 1, the machine forming the subject matter of the present invention is used for working components made of wood or similar materials.

The machine, which, by way of example only, is a disc type saw machine, basically comprises a base 1 that supports a fixed horizontal table 2 forming the machine's work table on which the component to be worked (not illustrated) is placed. The component (in a simplified solution that does not restrict the scope of the present invention) may be fed by the operator to a power-driven tool 3 with the aid of a geared motor 3m. A cutting portion P of the tool 3 protrudes from a slot 2a made in the work table 2: the protruding portion P thus comes into contact with the panel as the latter is pushed manually against it by the operator.

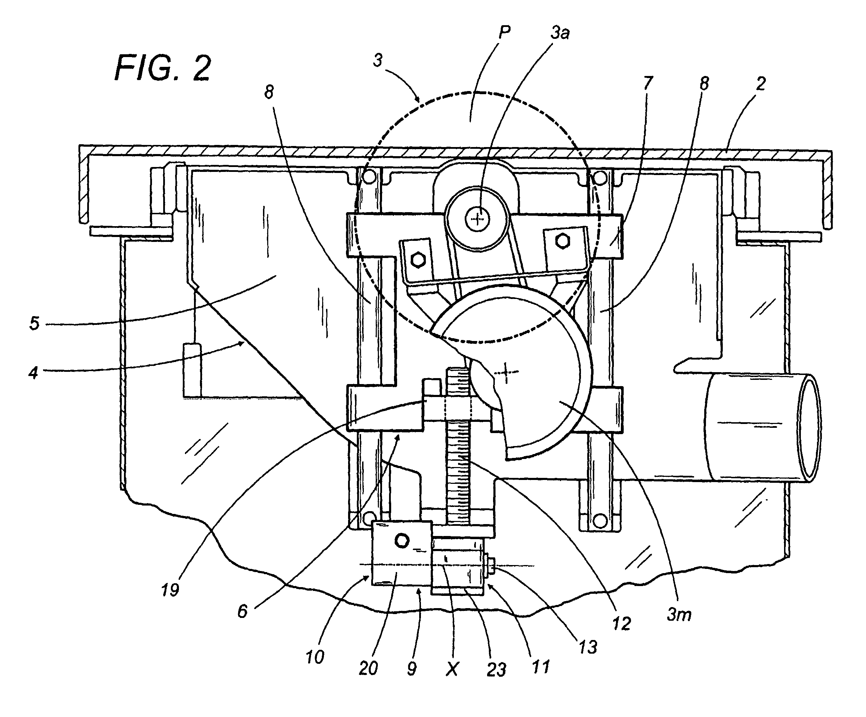

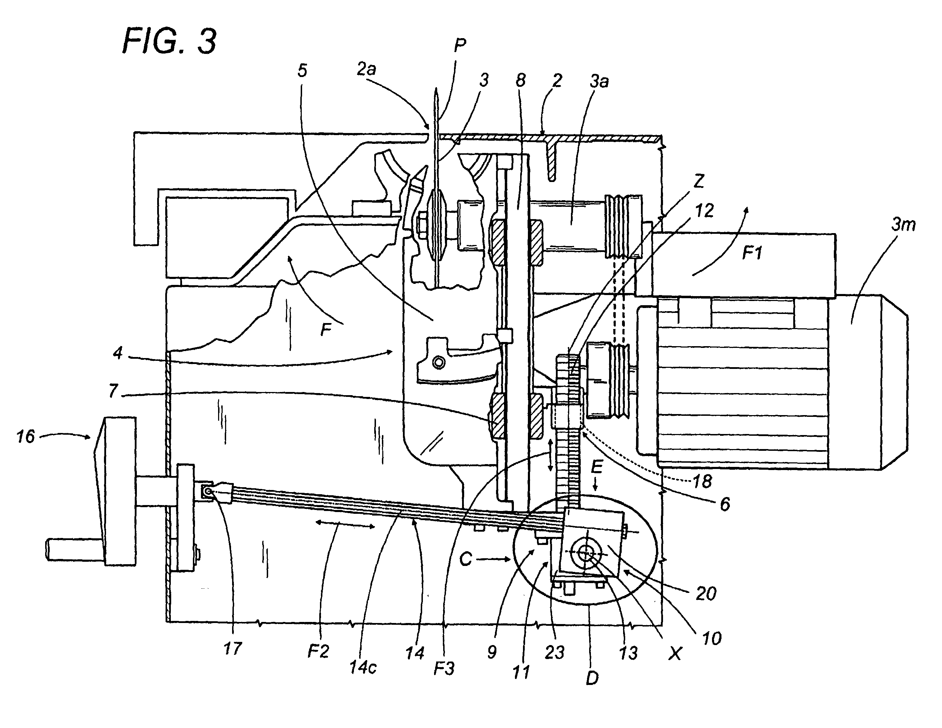

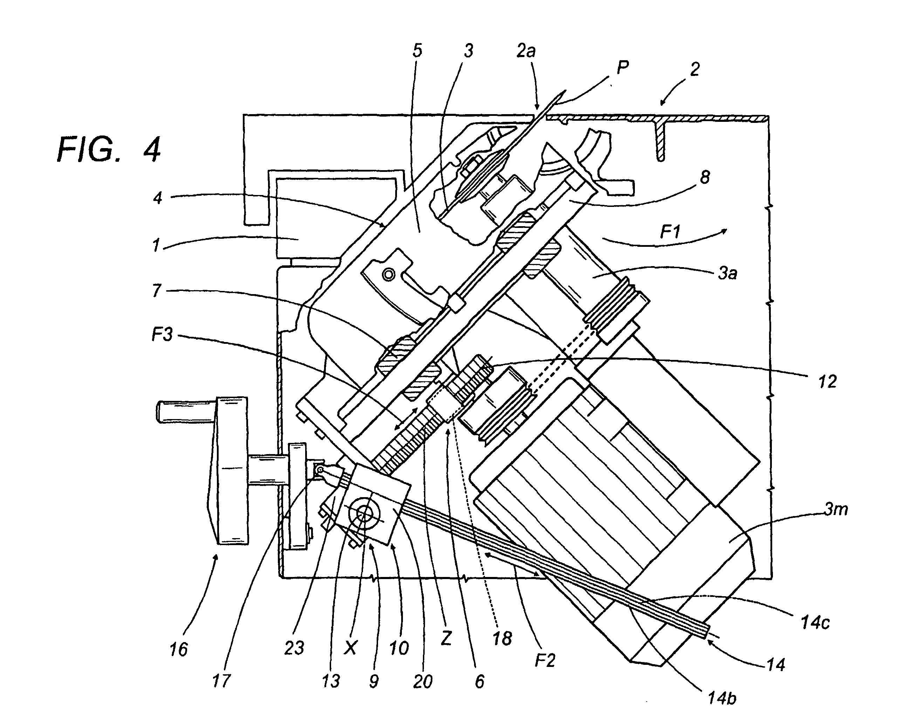

The tool 3 (in practice, a circular blade, as clearly shown in Figures 2, 3, and 4) is mounted on a tool holder 4 comprising a mounting plate 5 housed in the base 1 and equipped with first means 50 for adjusting the angle of the tool 3 relative to the work table 2. The first adjustment means 50, which are not illustrated detail since they do not strictly form part of the invention, include a first handwheel 50v, used by the operator and located at the front of the machine. The handhwheel 50v is connected directly to a worm screw 50f (drawn with a dashed line in Figure 1) that is screwed to the mounting plate 5 in order to allow the plate 5 and the tool mounted on it to be angled (see arrows F and F1 in Figures 3 and 4).

The mounting plate 5 is also acted on by second means 6 for adjusting the cutting portion P of the tool 3 relative to the work table 2. The second adjustment means 6 comprise a slide 7, associated to the shaft 3a of the tool 3 and slidably fitted on a pair of vertical guides 8, attached to the mounting plate 5, in such a way as to enable the tool 3 to be raised and lowered.

The slide 7 is driven by control means 9 designed to allow the above mentioned two-way adjusting movement to be performed.

The control means 9 for adjusting the protruding cutting portion P of the tool 3 essentially comprise a kinematic chain for transmitting irreversible rotational motion and which in turn comprises a first and a second transmission unit 10 and 11. The first transmission unit 10 has a first driving element consisting of a drive and adjustment bar 14, while the second unit 11, comprises, as the driven element, a lead screw 12 for transmitting motion to the slide 7.

Looking in more detail (still with reference to Figures 2, 3 and 4), the first and second transmission or reduction units 10 and 11 are located in the base 1 and are kinematically linked to each other along a common horizontal axis X in such a way as to form a right-angled kinematic chain: the second unit 11 is equipped with the lead screw 12, with axis Z, that is helically engaged on the slide 7 and kinematically linked to a shaft 13 that connects it to the first reduction unit 10; the shaft 13 extends along the common axis X and can be operated from the control bar 14. Further, the second transmission unit 11 is attached to the lower portion of the mounting plate 5.

As shown in Figures 3 and 4, the bar 14 not only constitutes an element along whose axis the first and second transmission or reduction units 10 and 11 can slide according to the angle of the mounting plate 5, but can also rotate about its longitudinal axis 14c so as to adjust the position of the slide 7 in height.

In practice, the two units 10 and 11 continuously follow the plate 5, sliding in both directions (see arrow F2 in Figures 3 and 4) on the slide bar 14 so as to adjust the height of the tool 3 and transmitting their adjustment motion from the slide bar 14 to the lead screw 12 and hence to the slide 7. In particular, the second transmission unit 11, being attached to the plate 5, continuously follows the plate 5, whilst (as described in more detail below) the first unit 10 adjusts to the angle of the bar 14.

Looking more closely at the constructional details of the solution, the bar 14, which constitutes the driving element of the first transmission unit 10, consists of a hexagonal bar 14b that is slidably coupled with a matching first bush 15 forming part of the first transmission or reduction unit 10. The hexagonal bar 14b is connected at one end to a control element 16, outside the base 1, through a universal joint 17, that enables the bar 14 to be adjusted, that is to say, to be slanted relative to the element 16, in accordance with the position assumed or to be assumed by the mounting plate 5. In the embodiment illustrated in the accompanying drawings, the external control element is a handwheel 16 to be turned manually but, without in any way restricting the scope of the invention, it might be any other type of manual or automatic control.

The lead screw 12, which constitutes the driven element of the second transmission unit 11, is a worm screw 12 coupled to a lead nut 18 forming part of a rigid element 19 of the slide 7 so as to enable the slide 7 to be raised or lowered (see arrow F3 in Figures 3 and 4).

The first transmission unit 10 comprises, within a first casing 20, the above mentioned first bush 15, the latter being axially engaged by the hexagonal bar 14b and having, mounted on its outer surface, a first helical gear wheel 21 meshed with a corresponding second helical gear wheel 22 mounted on the portion of the shaft 13 located in the first casing 20 in such a way as to form the driven element of the first transmission or reduction unit 10.

The second transmission unit 11 comprises, within a second casing 23, a third helical gear 25 made on one end of the above mentioned lead screw 12 and meshed to a fourth helical gear wheel 24 mounted on the portion of the shaft 13 located in the second casing 23 in such a way as to form the driving element of the lead screw 12.

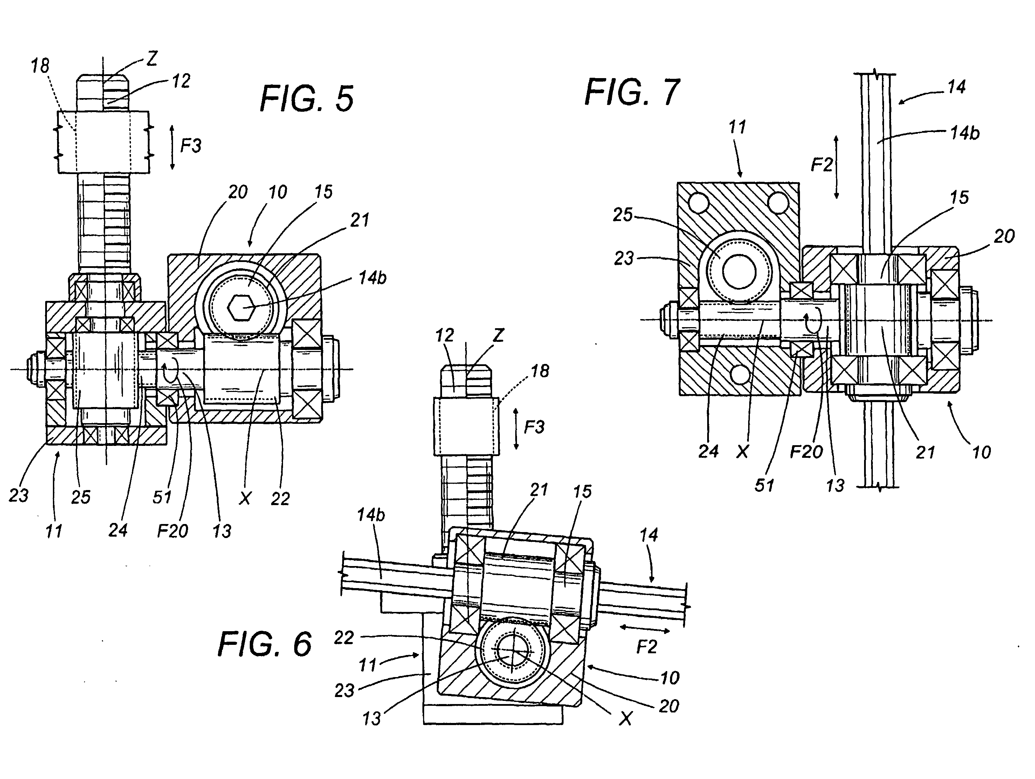

As shown in Figures 5 and 7, the two casings 20 and 23 can rotate relative to each other (see arrow F20) about the common axis X thanks to a bearing 51 that is axially associated to the shaft 13 and partially housed in both casings 20 and 23. Thus, the two casings need not always be inclined by the same angle during the adjustments of the mounting plate 5.

In practice, a kinematic chain made in this way permits rapid and precise adjustment of the slide 7, and thus of the tool 3, irrespective of the angular position assumed or to be assumed by the mounting plate 5. Thanks to its design, the hexagonal bar 14b, by being rotated in either direction, moves the shaft 13 which in turn, through the pair of helical gear wheels 22 and 25, turns the lead screw 12 which is connected to the slide 7 and thus enables the cutting portion P of the tool 3 to be adjusted in height. The change in the angle of the mounting plate 5 is followed by the two units 10 and 11: the second unit 11, being attached to the plate 5, follows its movement directly, whilst the first unit 10, being coupled to the hexagonal bar 14b, can slide on the bar 14b itself in one of the two directions, depending on the required angle of the tool 3. The bar 14b can be angled so as to adjust the position of the first unit 10 relative to the mounting plate 5 and to the second unit 11 thanks also to the fact that the two casings 20 and 23 can rotate relative to each other about the common axis X.

The design of this kinematic chain is therefore extremely simple, with few component elements, but capable of achieving a very accurate and rapid adjustment of tool height. Moreover, since the worm screw connected to the slide does not allow reverse movements, the blade cannot be pushed down by the force of the component being cut (that is, when the blade is at work) and so does not lose its positional setting.

The invention described can be subject to modifications and variations within the scope of the appended claims.

## Claims

1. A disc saw machine for working components made of wood or similar materials, the machine being of the type comprising a base (1) that supports a horizontal work table (2) on which the panel to be machined is placed; there being at the work table (2) at least one power-driven tool (3), in the form of a disc saw, a cutting portion (P) of which protrudes from the work table (2) so as to come into contact with the panel fed to it; the tool (3) being mounted on a tool holder (4) comprising a mounting plate (5) housed in the base (1) and equipped with first means (50, 50t, 50v) for adjusting the angle of the tool (3) relative to the work table (2); the tool (3) also being acted upon by second means (6) for adjusting its cutting portion (P) relative to the work table (2) and comprising a slide (7) associated to the shaft of the tool (3) and slidably fitted on a pair of vertical guides (8) attached to the mounting plate (5), in such a way as to permit raising and lowering of the tool (3); the slide (7) being driven by control means (9) designed to allow the above mentioned adjusting movement to be performed; the control means (9) for adjusting the protruding cutting portion (P) of the tool (3) comprising a kinematic chain for transmitting irreversible rotational motion and which in turn comprises a first transmission unit (10) and a second transmission unit (11); the driving element (22) of said first transmission unit (10) being prismatically coupled to a rotating drive bar (14), and the driven element (24) of said second unit (11) forming a lead screw (12) for transmitting motion to the slide (7); said second transmission unit (11) being attached to the mounting plate (5); said first transmission unit (10) and said second transmission unit (11) of said kinematic chain being located in the machine base (1); the machine being **characterised in that** said first and second transmission units (10, 11) are kinematically connected to each other along an axis (X) common to said driving element (22) of said first unit (10) and common to said driven element (24) of said second unit (11); said lead screw (12), with an axis (Z), being helically engaged on said slide (7) and kinematically linked to a shaft (13), the latter extending along said axis (X), connecting said slide (7) to said first reduction unit (10) and driven by said rotating drive bar (14) designed to form an element along whose axis said first and second transmission units (10, 11) can slide according to the angle of said mounting plate (5), but can also rotate about its longitudinal axis (14c) so as to adjust the position of said slide (7) in height.

2. The machine according to claim 1, **characterised in that** said rotating drive bar (14) forming the driving element of said first transmission unit (10) consists of a hexagonal bar (14b) that is slidably coupled with a matching first bush (15) forming part of said first transmission or reduction unit (10).

3. The machine according to claim 2, **characterised in that** said hexagonal bar (14b) is connected at one end to a control element (16), outside said base (1), through a universal joint (17), that enables said bar (14b) to be slanted relative to said element (16), in accordance with the position assumed or to be assumed by said mounting plate (5).

4. The machine according to claim 1, **characterised in that** said lead screw (12) constituting the driven element of said second transmission unit (11) is a worm screw (12) coupled to a lead nut (18) forming part of an element (19) of said slide (7) connected to said sliding guides (8) in such a way as to enable said slide (7), and hence said tool (3), to be raised or lowered.

5. The machine according to any of claim 2 to 4, **characterised in that** said first transmission unit (10) comprises, within a first casing (20), said first bush (15), the latter being axially engaged by the rotating drive bar (14) and having, mounted on its outer surface, a first helical gear wheel (21) meshed with a corresponding second helical gear wheel (22) mounted on the portion of the shaft (13) located in the first transmission unit (10) in such a way as to form the driven element of said first transmission unit (10).

6. The machine according to any of the foregoing claims, **characterised in that** said second transmission unit (11) comprises, within a second casing (23), a third helical gear wheel (25) meshed with a corresponding fourth helical gear wheel (24) mounted on the portion of said shaft (13) located in said second transmission unit (11) in such a way as to form the driving element of said lead screw (12).

7. The machine according to any of claims 2 to 6, **characterised in that** said hexagonal bar (14b) is acted on by a universal joint (17) connected to a handwheel (16) located outside said base (1).

8. The machine according to any of the foregoing claims, **characterised in that** said first and second transmission units (10, 11) can rotate relative to each other thanks to bearing means (51) located on said connecting shaft (13).

## Patentansprüche

1. Kreissägemaschine zur Bearbeitung von Teilen aus Holz oder ähnlichen Materialien, wobei die Maschine von einem Typ ist, enthaltend einen Sockel (1), der einen horizontalen Arbeitstisch (2) trägt, auf welchen das zu bearbeitende Paneel gelegt wird; wobei sich an dem Arbeitstisch (2) wenigstens ein angetriebenes Werkzeug (3) in Form einer Kreissäge befindet, von welcher ein Schneidabschnitt (P) aus dem Arbeitstisch (2) herausragt, so dass dieser mit dem ihm zugeführten Paneel in Kontakt kommt; wobei das Werkzeug (3) an einem Werkzeughalter (4) montiert ist, enthaltend eine Montageplatte (5), angeordnet in dem Sockel (1) und versehen mit ersten Mitteln (50, 50f, 50v) zum Einstellen des Winkels des Werkzeugs (3) entsprechend zu dem Arbeitstisch (2); wobei auf das Werkzeug (3) ebenfalls zweite Mittel (6) zum Regulieren seines Schneidabschnittes (P) im Verhältnis zu dem Arbeitstisch (2) wirken, die einen Schlitten (7) enthalten, zugeordnet der Welle des Werkzeugs (3) und gleitbar an einem Paar von vertikalen Führungen (8) befestigt, die auf solche Weise an der Montageplatte (5) angebracht sind, dass sie das Heben und Senken des Werkzeugs (3) erlauben; wobei der Schlitten (7) durch Antriebsmittel (9) angetrieben ist, dazu bestimmt, die oben erwähnte Einstellbewegung auszuführen zu lassen; wobei die Antriebsmittel (9) zum Regulieren des herausragenden Schneidabschnittes (P) des Werkzeugs (3) eine kinematische Kette zum Übertragen einer nicht umkehrbaren Drehbewegung enthalten, welche wiederum eine erste Übertragungseinheit (10) und eine zweite Übertragungseinheit (11) enthält; wobei das Antriebselement (22) der genannten ersten Übertragungseinheit (10) prismatisch an eine rotierende Antriebsstange (14) angeschlossen ist und das angetriebene Element (24) der genannten zweiten Einheit (11) eine Leitspindel (12) zum Übertragen der Bewegung auf den Schlitten (7) bildet; wobei die genannte zweite Übertragungseinheit (11) an der Montageplatte (5) befestigt ist; wobei die genannte erste Übertragungseinheit (10) und die genannte zweite Übertragungseinheit (11) der genannten kinematischen Kette in dem Maschinensockel (1) angeordnet sind; wobei die Maschine **dadurch gekennzeichnet ist, dass** die ersten und zweiten Übertragungseinheiten (10, 11) kinematisch miteinander verbunden sind, und zwar entlang einer Achse (X), die dem genannten Antriebselement (22) der genannten ersten Einheit (10) und dem genannten angetriebenen Element (24) der genannten zweiten Einheit (11) gemeinsam ist; wobei die genannte Leitspindel (12), mit einer Achse (Z), schneckenförmig in den genannten Schlitten (7) greift und kinematisch an eine Welle (13) angeschlossen ist, letztere sich entlang der genannten Achse (X) erstreckend, den genannten Schlitten (7) mit der genannten ersten Reduktionseinheit (10) verbindend und angetrieben durch die genannte rotierende Antriebsstange (14), dazu bestimmt, ein Element zu bilden, entlang dessen Achse die genannten ersten und zweiten Übertragungseinheiten (10, 11) je nach dem Winkel der genannten Montageplatte (5) gleiten können, sich aber auch um deren Längsachse (14c) drehen können, so dass die Position des genannten Schlittens (7) in der Höhe reguliert wird.

2. Maschine nach Patentanspruch 1, **dadurch gekennzeichnet, dass** die genannte rotierende Antriebsstange (14), die das Antriebselement der genannten ersten Übertragungseinheit (10) bildet, aus einer Sechskantstange (14b) besteht, die gleitbar mit einer passrechten ersten Buchse (15) verbunden ist, welche Teil der genannten ersten Übertragungs- oder Reduziereinheit (10) bildet.

3. Maschine nach Patentanspruch 2, **dadurch gekennzeichnet, dass** die genannte Sechskantstange (14b) mit einem Ende an ein Antriebselement (16) ausserhalb des genannten Sockels (1) angeschlossen ist, und zwar durch eine Universalkupplung (17), welche die genannte Stange (14b) in die Lage versetzt, im Verhältnis zu dem genannten Element (16) je nach einer durch die genannte Montageplatte (5) eingenommenen oder einzunehmenden Position geneigt zu werden.

4. Maschine nach Patentanspruch 1, **dadurch gekennzeichnet, dass** die genannte, das angetriebene Element der genannten zweiten Übertragungseinheit (11) bildende Leitspindel (12) eine Wurmschraube (12) ist, verbunden mit einer Schraubenmutter (18), die Teil eines Elementes (19) des genannten Schlittens (7) bildet, und angeschlossen an die Gleitführungen (8) auf solche Weise, dass der genannte Schlitten (7), und somit das genannte Werkzeug (3), gehoben oder gesenkt werden können.

5. Maschine nach einem beliebigen der Patentansprüche von 2 bis 4, **dadurch gekennzeichnet, dass** die erste Übertragungseinheit (10) innerhalb eines ersten Gehäuses (20) die genannte erste Buchse (15) enthält, wobei letztere axial durch die rotierende Antriebsstange (14) gegriffen ist und an ihrer äusseren Oberfläche ein erstes Schneckenrad (21) montiert hat, im Eingriff mit einem entsprechenden zweiten Schneckenrad (22), das an dem in der ersten Übertragungseinheit (10) angeordneten Abschnitt der Welle (13) auf solche Weise montiert ist, dass das Antriebselement der genannten ersten Übertragungseinheit (10) gebildet wird.

6. Maschine nach einem beliebigen der vorstehenden Patentansprüche, **dadurch gekennzeichnet, dass** die genannte zweite Übertragungseinheit (11) innerhalb eines zweiten Gehäuses (23) ein drittes Schneckenrad (25) enthält, im Eingriff mit einem entsprechenden vierten Schneckenrad (24), das an dem in der genannten zweiten Übertragungseinheit (11) angeordneten Abschnitt der genannten Welle (13) auf solche Weise montiert ist, dass das Antriebselement der genannten Leitspindel (12) gebildet wird.

7. Maschine nach einem beliebigen der Patentansprüche von 2 bis 6, **dadurch gekennzeichnet, dass** die genannte Sechskantstange (14b) durch eine Universalkupplung (17) betätigt wird, verbunden mit einem ausserhalb des genannten Sockels (1) angeordneten Handrad (16).

8. Maschine nach einem beliebigen der vorstehenden Patentansprüche, **dadurch gekennzeichnet, dass** die genannten ersten und zweiten Übertragungseinheiten (10, 11) sich im Verhältnis zueinander drehen können, und zwar dank Lagermitteln (51), die an der genannten Anschlusswelle (13) angeordnet sind.

## Revendications

1. Une scie à disque pour l'usinage de pièces en bois ou dans une matière similaire, cette machine comprenant un bâti (1) qui supporte une table d'usinage (2) horizontale sur laquelle repose le panneau à découper ; au niveau de la table d'usinage (2) se trouve au moins un outil motorisé (3), à savoir, une scie à disque, dont une partie tranchante (P) dépasse de la table d'usinage (2) de manière à entrer en contact avec le panneau alimenté ; l'outil (3) étant monté sur un porte-outil (4), qui comprend une plaque de montage (5) située à l'intérieur du bâti (1) et équipée de premiers moyens (50, 50t, 50v) de réglage de l'angle de l'outil (3) par rapport à la table d'usinage (2); l'outil (3) étant également actionné par des seconds moyens (6) de réglage de sa partie tranchante en saillie (P) par rapport à la table d'usinage (2),comprenant un chariot (7) qui est associé à l'arbre de l'outil (3) et monté de façon coulissante sur une paire de guides verticaux (8) fixés à la plaque de montage (5), de manière à permettre la montée et la descente de l'outil (3); le chariot (7) recevant le mouvement d'organes de commande (9), conçus pour permettre l'exécution dudit mouvement de réglage; les organes de commande (9) pour le réglage de la partie tranchante (P) en saillie de l'outil (3) comprenant une chaîne cinématique de transmission d'un mouvement de rotation irréversible, qui comprend à son tour un premier groupe de transmission (10) et un second groupe de transmission (11) ; l'élément menant (22) dudit premier groupe de transmission (10) étant couplé par un raccord prismatique à une barre rotative d'entraînement (14), et l'élément mené (24) dudit second groupe de transmission (11) formant une vis-mère (12) pour la transmission du mouvement au chariot (7); ledit second groupe de transmission (11) étant fixé à la plaque de montage (5) et ledit premier groupe de transmission (10) et ledit second groupe de transmission (11) de ladite chaîne cinématique étant contenus dans le bâti (1) de la machine ; la machine étant **caractérisée en ce que** lesdits premier et second groupes de transmission (10, 11) sont cinématiquement reliés entre eux le long d'un axe (X) commun audit élément menant (22) dudit premier groupe de transmission (10) et commun audit élément mené (24) dudit second groupe de transmission (11) ; ladite vis-mère (12), dotée d'un axe (Z), étant engagée en hélice sur ledit chariot (7) et reliée cinématiquement à un arbre (13), lequel s'étend le long dudit axe (X), reliant ledit chariot (7) audit premier groupe de réduction (10) et actionné par ladite barre rotative d'entraînement (14) conçue pour former un axe le long duquel peuvent coulisser lesdits premier et second groupes de transmission (10, 11), en fonction de l'angle de ladite plaque de montage (5), et pouvant également tourner autour de son axe longitudinal (14c) de manière à permettre le réglage en hauteur dudit chariot (7).

2. La machine selon la revendication 1, **caractérisée en ce que** ladite barre rotative d'entraînement (14), qui constitue l'élément menant dudit premier groupe de transmission (10), consiste en une barre hexagonale (14b) qui est accouplée de façon coulissante avec une première douille complémentaire (15) faisant partie dudit premier groupe (10) de transmission ou de réduction.

3. La machine selon la revendication 2, **caractérisée en ce qu'**une extrémité de ladite barre hexagonale (14b) est reliée à un organe de commande (16), situé à l'extérieur dudit bâti (1), par l'intermédiaire d'un joint de cardan (17), qui permet l'inclinaison de ladite barre (14b) par rapport audit organe de commande (16) en fonction de la position angulaire occupée ou devant être occupée par ladite plaque de montage (5).

4. La machine selon la revendication 1, **caractérisée en ce que** ladite vis-mère (12), constituant l'élément mené dudit second groupe de transmission (11), est une vis sans fin (12) accouplée à un écrou (18), faisant partie d'un élément (19) dudit chariot (7) relié aux guides de coulissement (8) de manière à permettre la montée et la descente dudit chariot (7) et donc dudit outil (3).

5. La machine selon l'une quelconque des revendications de 2 à 4, **caractérisée en ce que** ledit premier groupe de transmission (10) comprend, à l'intérieur d'un premier boîtier (20), ladite première douille (15), laquelle est axialement engagée par ladite barre rotative d'entraînement (14) et est dotée, sur sa surface extérieure, d'une première roue à denture hélicoïdale (21) en prise avec une seconde roue à denture hélicoïdale (22) montée sur la portion de l'arbre (13) située dans le premier groupe de transmission (10) de manière à former l'élément mené dudit premier groupe de transmission (10).

6. La machine selon l'une quelconque des revendications précédentes, **caractérisée en ce que** ledit second groupe de transmission (11) comprend, à l'intérieur d'un second boîtier (23), une troisième roue à denture hélicoïdale (25) en prise avec une quatrième roue à denture hélicoïdale (24) montée sur la portion dudit arbre (13) située dans ledit second groupe de transmission (11), de manière à former l'élément menant de ladite vis-mère (12).

7. La machine selon l'une quelconque des revendications de 2 à 6, **caractérisée en ce que** ladite barre hexagonale (14b) est actionnée par un joint de cardan (17) relié à un volant (16) situé à l'extérieur dudit bâti (1).

8. La machine selon l'une quelconque des revendications précédentes, **caractérisée en ce que** lesdits premier et second groupes de transmission (10, 11) peuvent tourner l'un par rapport à l'autre grâce à des moyens à roulement (51) situés sur l'arbre de liaison (13).
